Europäisches Patentamt

(19) European Patent Office

Office européen des brevets

(11) Publication number: **0 009 374**
**B1**

(12) **EUROPEAN PATENT SPECIFICATION**

(45) Date of publication of patent specification: **23.05.84**

(51) Int. Cl.³: **B 01 D 13/00, C 02 F 1/44**

(21) Application number: **79301885.4**

(22) Date of filing: **13.09.79**

(54) **Process for the separation of constituents of gas/gas, liquid/liquid, or liquid/solid mixtures or solutions.**

(30) Priority: **19.09.78 US 943793**
**19.09.78 US 943738**
**19.09.78 US 943739**
**30.10.78 US 956032**

(43) Date of publication of application:
**02.04.80 Bulletin 80/07**

(45) Publication of the grant of the patent:
**23.05.84 Bulletin 84/21**

(84) Designated Contracting States:
**AT BE CH DE FR GB IT LU NL**

(56) References cited:
**FR-A-2 193 633**
**FR-A-2 361 452**
**GB-A-1 380 393**
**GB-A-1 400 774**
**US-A-3 422 008**
**US-A-3 455 460**
**US-A-3 870 637**
**US-A-4 045 851**
**US-A-4 061 574**

(73) Proprietor: **ALBANY INTERNATIONAL CORP.**
**1 Sage Road**
**Menards New York 12201 (US)**

(72) Inventor: **Bilewski, Fred**
**13 Oak Street**
**Medway Massachusetts 02053 (US)**
Inventor: **Coplan, Myron J.**
**47 Speen Street**
**Matick Massachusetts 01760 (US)**
Inventor: **Burchesky, Robert D.**
**15 Corbett Avenue**
**Dedham Massachusetts 02026 (US)**
Inventor: **Sebring, Robert E.**
**17 Orchard Circle**
**Westwood Massachusetts 02090 (US)**

(74) Representative: **Jennings, Roy Alfred et al**
**GILL JENNINGS & EVERY 53-64 Chancery Lane**
**London WC2A 1HN (GB)**

(56) References cited:
**CHEMICAL & ENGINEERING NEWS, vol. 53, no. 50, 15th December 1975, page 21, Columbus, Ohio, US, "Membrane effective for desalting water"**

Courier Press, Leamington Spa, England.

## Description

This invention relates to a process for the separation of constituents of a gas/gas, liquid/liquid or a liquid/solid mixture or solution, wherein the mixture or solution is supplied under pressure to a hollow filament separatory module which contains a bundle of semi-permeable hollow filaments, whereby permeate passes through the walls of the filaments and is separated from other constituents of the mixture or solution, the bundle having the shape of a hollow right circular cylinder and consisting of a plurality of layers of the filaments, each of the layers consisting of filaments, each disposed in a helix with the helices in adjacent layers being wound to opposite hands and either all the filaments having both ends open or all of the filaments having one end sealed and one end open.

One form of hollow filament separatory module, which is disclosed in US—A—3,870,637, includes a bundle of semi-permeable hollow filaments which has the shape of a hollow right circular cylinder and consists of a plurality of layers of the filaments. Each of the layers consists of filaments each disposed in a helix with the helices in adjacent layers being wound to opposite hands. In the bundle disclosed in US—A—3,870,637, all the filaments have both ends open and both these ends are at one end of the bundle where the ends of the filaments are encapsulated in a potting compound such as epoxy resin. US—A—3,870,637 discloses that it is known that for the module to operate efficiently, it is necessary for the lengths of the filaments to be kept below certain maxima which are defined mathematically as a function of certain parameters of the module.

The present invention is based on the discovery that the process initially described can be still further enhanced if the lengths of the filaments are below a critical value which is dependant not only on some parameters of the module but also of the mixture or solution supplied to the module. The critical length depends amongst other things upon whether both ends, or only one end, of each filament is open.

It has been demonstrated that with inherently high flux membrane capabilities unless due account is taken of filament length and bore diameter, adverse results will occur. The results are an increase in salt passage through the membranes formed by the filament walls and a decrease in the effective use of surface of the filament in respect to the normal "zero"-length flux. In effect, both flux and rejection are diminished with filaments "too long" relative to their bore size and inherent permeation rate.

It should be noted that it is possible to use hollow filaments in reverse osmosis either with the bore open at one end and sealed at the other, or with the bore open at both ends. In the former case, the open filament end is sealed in a mass of potting compound and its bore discharges into a low pressure permeate collection chamber. The closed end may be potted into a resin mass or the like to help support one end of the bundle of which the filament forms a part.

When both bore ends are open in each filament length, both ends of the filament must be sealed in a potting compound in such a way that the bore discharge exits into low pressure permeate collection chambers at both ends. Two ends of any one filament may be located in the same mass of potting compound, the filament being formed in a loop and each bore exit may then discharge to the same collection chamber. Alternatively, the filaments may be potted in such a way that both open bore ends discharge into separate collection chambers.

According to this invention, a process as initially described is characterised in that the straightened lengths of the filaments when both ends are open, or twice the straightened lengths of the filaments when one end is sealed and one end is open, are no greater than $L_{crit}$ in centimetres, where:—

$$L_{crit}=\sqrt{\frac{(P-\Delta\pi)\times(ID)^3\times(R)}{50F}}$$

wherein:

$P$=Module inlet feed pressure in $kN/m^2/98$;

$\Delta\pi$=Osmotic pressure difference between feed solution and permeate in $kN/m^2/98$;

$ID$=Filament internal diameter in micrometers;

$R$=Ratio of filament inside diameter to outside diameter;

$F$=Flux of filament based on its outside diameter at the effective operating pressure expressed as a velocity of micrometers per second ($\mu m/sec$).

According to a preferred feature of the invention, the bundle of filaments is formed by winding one or a group of filaments continuously on a mandrel while continuously making reciprocating traverses of the point of winding parallel to the axis of the mandrel between two points a distance D apart, N turns being wound in one such traverse, N being selected so that the filament turns do not build up into ridges, the traverses each with the same number to turns being made until a lamella of turns has been built up to a larger radius after which the ratio of rotational to traversing velocities is changed to reduce the number of turns N in each traverse over the distance D to a second smaller number and continuing to make traverses each with the same reduced number of turns without building ridges until a second lamella has been built up, and thereafter making successively additional discrete reductions of the number of turns N over the distance D to produce additional lamellae each formed by a number of traverses with the same number of turns in each traverse until the bundle external radius is reached.

The filaments or fibres used may be of diameters consistent with the flow requirements of high flux membranes. For example, it is possible to use filaments or fibres with diameters of as little as 100 $\mu$m or as much as 500 $\mu$m or more. The specific dimensions of length and diameter of the fibres can be very important depending upon the intended use of the module. The present invention allows for easy selection of these dimensions. In reverse osmosis applications, we prefer fibres of at least about 250 $\mu$m in diameter.

Each hollow filament is preferably a composite hollow filament comprising a porous substrate overcoated with a rejection barrier which restricts the passage of salts in a feed solution to the module.

For purposes of considering the examples illustrating the adverse effect of filament length on bore flow effects, the actual path shape of each filament need not be considered. It is important however to take numerical account of the consequence of operating with one sealed end versus both ends open. In the sealed-end case, the flow within the filament bore can only be from the sealed end toward the open end. The two-end-open case, flow within the fibre bore is bi-directional with respect to some point or zone along the fibre path. That is to say, there must be a stagnation point or region in the bore corresponding to the sealed end of the one-end-open case; bore flow on one side of said point or zone will be towards the bore exit at one cut end, while bore flow on the other side of said zone will be towards the bore exit at the other cut end. Thus, a position approximately halfway along the path between the ends of a two-end open fibre corresponds to the sealed end of a one-end open fibre.

The operation of the dimensional relationship of the filaments in the bundle in the process of the invention will be illustrated in several following examples. In each instance a group of filaments was formed into a loop, and the legs of the loop of filaments were sealed in a potting compound and open ends of the filaments were exposed all on one side of said compound. The lengths of filament loop on the opposite side of the compound were mounted inside pressure tubing and subject to flowing feed of salt solution under pressure. The length of loop, L, was taken as the overall distance from one cut end to the other cut end of the filament substantially all of said length being within the pressurised feed zone, and a relatively inconsequential amount comprising the length of filament in the potting compound. A slight correction may be made for the so-called "inactive length" of fibre sealed in the potting compound. The length of the filaments which must be below $L_{crit}$ as defined above is the active length of the filament which is exposed and not enclosed in potting compound. In general the ratio "inactive length/active length" is about 0.1 or less.

All the filaments or fibres employed in the examples below were a composite of polysulphone substrate with a rejection barrier of sulphonated polyfuran resin. The outside diameters were all 250 $\mu$m and inside diameters 80 $\mu$m (within tolerances of $\pm 5$ $\mu$m). The several samples were selected to cover a fairly wide range of flux and rejection properties.

Each sample was prepared with different end-to-end lengths. Each sample was tested for permeate flux and rejection of 2000 ppm NaCl solution at 58 KN/m²/98 applied pressure down to as low as 14.5 KN/m²/98 applied pressure (200 psi). The osmotic pressure ($\delta\pi$) of the feed is taken as 1.4 KN/m²/98.

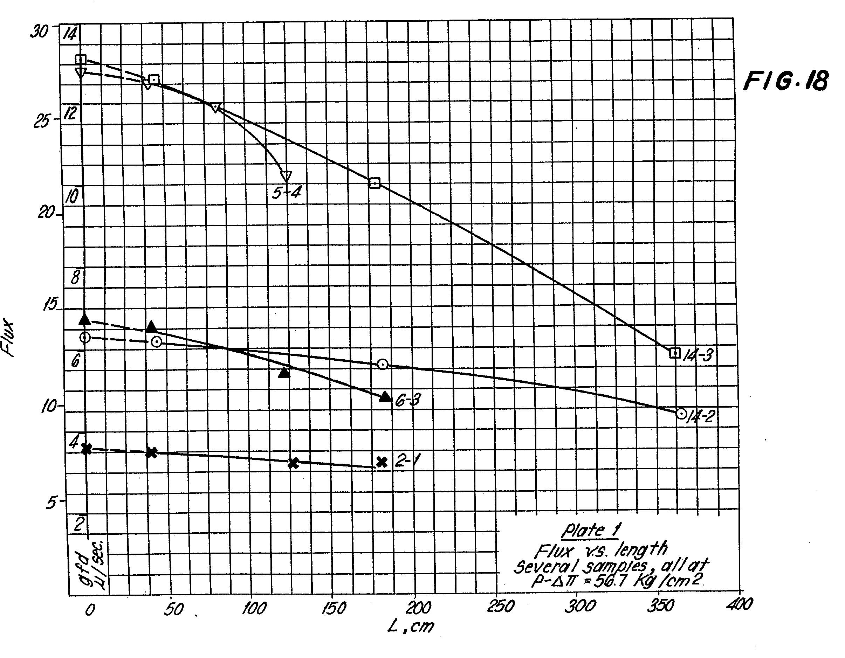

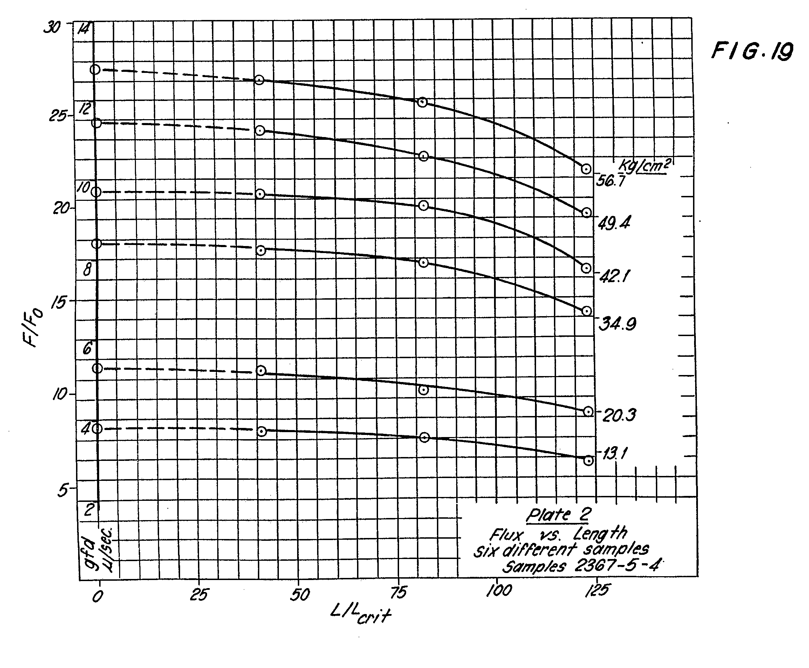

The flux and rejection of each fibre sample were measured at each of three fibre lengths and comprise the experimental data appearing in tables 1A and 1B. Flux was plotted vs. length as shown in the graphs forming Figures 18 and 19 of the accompanying drawings. Fairly reliable extrapolations to "zero" length flux were made on these plots and are included in parentheses in the tabulated property values shown in Tables 1A and 1B. Included also in the Table are the values of $L_{crit}$ calculated by use of Equation (1) for each fibre sample and operating pressure. Using these several calculated values of $L_{crit}$, the ratio of $L/L_c$ for each sample length was calculated and are also presented in the Table. Rejection is calculated in the conventional fashion, R=100 (1-salt conc. permeate/salt conc. feed). Flux is presented both as gallons per sq. ft. per day (gfd) and the velocity parameter, $\mu$m per second ($\mu$m/sec). These are related by 1 gfd=0.466 $\mu$m/sec. The ratio of flux at any given length to "zero"-length flux, $F/F_o$, is also tabulated.

TABLE I

Flux and rejection vs. fibre length

| A. Several different fibre samples at one pressure, $P-\Delta\pi=56.7$ KN/m²/98 | | | | | | B. One fibre sample, 2367-5-4, at several pressures | | | | | |
|---|---|---|---|---|---|---|---|---|---|---|---|
| L (cm) | L/L$_c$ — | Flux (gfd) | (μm/sec) | · F/F$_o$ — | Rej. (%) | L (cm) | L/L$_c$ — | Flux (gfd) | (μm/sec) | F/F$_o$ — | Rej. (%) |
| Sample 2292-14-2, L$_{crit}$=173 cm. | | | | | | $P-\Delta\pi$=13.1 KN/m²/98, L$_{crit}$=108 cm. | | | | | |
| 0 | 0 | (13.6) | (6.3) | — | — | 0 | 0 | (8.2) | (3.8) | — | — |
| 43 | .24 | 13.3 | 6.2 | .98 | 99.0 | 41 | .38 | 8.0 | 3.7 | .98 | 97.1 |
| 182 | 1.05 | 12.1 | 5.6 | .89 | 98.3 | 82 | .76 | 7.6 | 3.5 | .93 | 96.6 |
| 365 | 1.99 | 9.2 | 4.3 | .68 | 92.8 | 123 | 1.14 | 6.2 | 2.9 | .76 | 96.5 |
| Sample 2292-14-3, L$_{crit}$=121 cm. | | | | | | $P-\Delta\pi$=20.3 KN/m²/98, L$_{crit}$=113 cm. | | | | | |
| 0 | 0 | (28.2) | (13.1) | — | | 0 | 0 | (11.3) | (5.3) | — | — |
| 44 | .36 | 27.1 | 12.6 | .96 | 99.1 | 41 | .36 | 11.1 | 5.2 | .98 | 97.7 |
| 178 | 1.47 | 21.5 | 10.0 | .76 | 98.9 | 82 | .73 | 10.1 | 4.7 | .89 | 97.8 |
| 362 | 2.99 | 12.5 | 5.8 | .44 | 89.7 | 123 | 1.09 | 8.7 | 4.1 | .77 | 97.2 |
| Sample 2292-6-3, L$_{crit}$=170 cm. | | | | | | $P-\Delta\pi$=34.9 KN/m²/98, L$_{crit}$=118 cm. | | | | | |
| 0 | 0 | (14.4) | (6.7) | — | | 0 | 0 | (18.1) | (8.4) | — | — |
| 41 | .24 | 14.0 | 6.5 | .97 | 99.4 | 41 | .35 | 17.7 | 8.2 | .99 | 98.5 |
| 122 | .68 | 11.5 | 5.4 | .80 | 99.1 | 82 | .69 | 17.0 | 7.9 | .94 | 98.5 |
| 183 | 1.08 | 10.3 | 4.8 | .72 | 97.8 | 123 | 1.04 | 14.2 | 6.6 | .79 | 97.8 |
| Sample 2292-2-1, L$_{crit}$=230 cm. | | | | | | $P-\Delta\pi$=42.1 KN/m²/98, L$_{crit}$=120 cm. | | | | | |
| 0 | 0 | (7.7) | (3.6) | — | | 0 | 0 | (20.7) | (9.7) | — | — |
| 40 | .17 | 7.6 | 3.5 | .99 | | 41 | .34 | 20.5 | 9.6 | .99 | 98.6 |
| 127 | .55 | 6.8 | 3.2 | .88 | 98.6 | 82 | .68 | 20.0 | 9.3 | .97 | 98.7 |
| 181 | .79 | 6.9 | 3.2 | .90 | 98.9 | 123 | 1.03 | 16.6 | 7.7 | .80 | 98.2 |
| Sample 2367-5-4, L$_{crit}$=122 cm. | | | | | | $P-\Delta\pi$=49.4 KN/m²/98, L$_{crit}$=120 cm. | | | | | |
| 0 | 0 | (27.4) | (12.8) | — | | 0 | 0 | (24.5) | (11.4) | — | — |
| 41 | .33 | 26.8 | 12.5 | .98 | 98.7 | 41 | .34 | 24.1 | 11.2 | .98 | 98.6 |
| 82 | .67 | 25.6 | 11.9 | .93 | 98.9 | 82 | .68 | 22.1 | 10.5 | .92 | 98.7 |
| 123 | 1.01 | 22.0 | 10.2 | .80 | 97.8 | 123 | 1.03 | 19.6 | 9.1 | .80 | 98.0 |

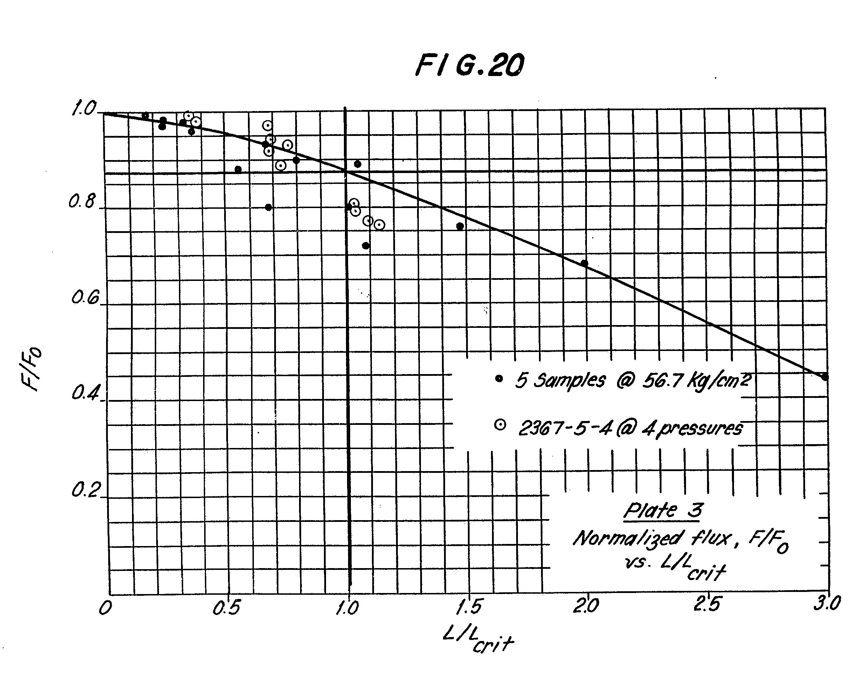

The data in Table I clearly indicates that both flux and rejection decline with increasing length of fibre, L. A consistent analysis of the effect of L on flux appears in the graph, 3, which forms Figure 20 of the accompanying drawings, where the ratio of flux at any length to "zero"-length flux (F/F$_o$) is plotted against the ratio of the fibre length under test L, to the critical fibre length, L$_c$, calculated according to Equation 1, (L/L$_c$). The points are clearly distributed in such a way that the graph can be partitioned into four quadrants by a vertical line corresponding to L/L$_c$=1 and a horizontal line corresponding to F/F$_o$=.88. At values of L less than L$_c$, the flux is 87.5% of the "zero"-length flux or greater for all but 1 of 15 points; at values of L greater than L$_c$, the observed flux is 83% of the "zero"-length flux or less for 7 of 8 points. When L is as great as 2 to 3 times L$_c$, the experienced flux can fall to as little as 40%—50% of the "zero"-length flux.

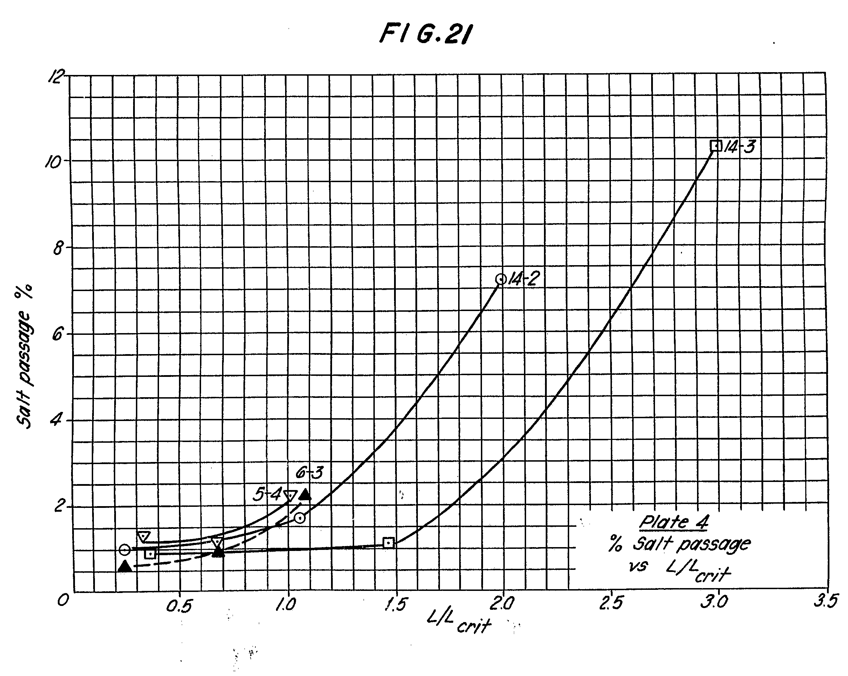

The effect of length on rejection shown in Table 1, is also represented in Figure 21 for several of the samples. For this plot, the value % Salt Passage is used and found from: Salt Passage=(100%–% Rejection). The % Salt Passage is plotted against the ratio L/L$_c$ in the graph which forms Figure 21 of the accompanying drawings. It will be seen that as L increases toward L$_c$, % Salt Passage rises only a few tenths of a per cent, but at L/L$_c$=1, % Salt passage starts to rise fairly rapidly.

It will be seen, therefore, that the critical end-to-end length, L$_c$, calculated through the Equation set forth above can be used as a practical criterion for preserving both a high percentage of "zero"-length flux and the superior salt rejec-

4

tion properties attendant therewith. In a corollary sense, constructing modules with fibres of end-to-end length greater than $L_c$, should be avoided, since there is both a fairly significant loss of permeate production efficiency as well as a degradation in permeate quality than can become intolerable. The exact value of $L_c$ does not, however, always determine an absolute boundary of acceptable performance. It might well be that "zero"-length flux and rejection values are so favourable that a flux efficiency of somewhat less than .85 could be tolerated along with a few percent increase of salt passage. In recognition of this, we use limits of ±10% around $L_c$ for practical module fabrication.

In the preferred method of preparing fibre bundles according to the present invention, the hollow fibres are wound continuously in alternating helices starting on a small diameter shaft or mandrel, building an annular bundle. The path length of fibre forming a helix from one end of the bundle to the other is a function of the radial position of the fibre in the annulus and its helix angle. Therefore, unless appropriate adjustments are made in the relative speed of rotation of the winding shaft and the end-to-end traverse speed of the bundle of filaments during the winding, there will be a continuously increasing length of fibre in any pass between the two ends of the bundle as the radial position increases. The changes can result in as much as a several-fold increase in the length of the helix or more. Perhaps in some conditions as much as 6- to 10-fold. Thus, if the length of helical loop from one end to the other has been determined for optimum flux and rejection, and the initial winding on the mandrel were to accomplish that optimum length, the external wraps in the annulus would be far in excess of the desired length. By selecting precalculated limits for the specific ratio of the rotational velocity of the winding mandrel and the reciprocating traverse mechanism, helices can be laid at selected radial positions in the annulus varying very slightly in respect to their length. For example, a helix length from the innermost to the outermost regions of the annulus never varying more than 10% above or below the optimum length can be achieved.

One might assume that this condition could be achieved by having a continuously decaying ratio of the rotational velocity of the mandrel to the traverse speed. But this leads to other problems obviated by our invention. It can be shown that at selected ratios of the rotational and traverse speeds the helix winds will build explicitly on top of one another thereby forming ridges. These ratios are unavoidable in any monotonically declining scheme. The result of the ridges is to build an annular package of helices having hills and valleys which are never properly filled as winding proceeds. In our method, we avoid this problem by selecting a series of discrete ratios of the winding and traverse rates and changing from one ratio to the next during the winding at predetermined annular positions.

It is a preferred feature of our invention that the annular bundle of helixes used in the process is self-supporting. Whereas the prior art describes in some instances helical bundles, these are generally firmly and permanently associated with the winding shaft or tube originally comprising the mandrel surface. Contrary to that, we have found superior results in both the winding and subsequent handling of the fibre bundle preparatory to potting and the like, by use of a collapsible expansible sleeve as the surface immediately upon which the first wraps of the bundle are wound. This sleeve may be a braided tube of yarn, for example. Said sleeve is secured over the winding shaft for a distance greater than the axial length of the annulus for support of the inner surface of the annulus. An additional length of the expansible sleeve sufficient to provide a continuous protective surface for the external fibres of the annulus, rolled around one end of the annulus, is also carried on the winding shaft.

The invention will be further described by way of example with reference to the accompanying drawings, in which:—

Figure 1 is a perspective view of one example of a hollow filament separatory module used in the process in accordance with the invention;

Figure 2 is a partially sectional longitudinal view of the module shown in Figure 1 taken along the line 2—2 in the direction of the arrows therein;

Figures 3, 4 and 5 are transverse sectional views taken respectively along the lines 3—3, 4—4 and 5—5 in the direction of the arrows in Figure 2;

Figure 6 is an exploded perspective view of a cylindrical winding support shaft and collapsible expansible sleeve about which hollow filaments are wound during the fabrication of the fibre bundle of the module shown in Figure 1;

Figure 7 is a perspective view of the support shaft with the sleeve in position thereon prior to winding;

Figure 8 is a perspective view of the support shaft and sleeve with the fibre helix being wound thereon to provide the fibre bundle;

Figure 9 is a perspective view illustrating the removal of the support shaft and stretching and folding of the sleeve after completion of the winding of the bundle;

Figures 10, 11 and 12 are partially diagrammatic longitudinal segmentary views illustrating the winding respectively of the first, an intermediate and the final or outer wrap in the annular fibre bundle;

Figure 13 is a diagrammatic view of inner, outer and intermediate wraps forming the bundle illustrating the location in each of these wraps where the fibre of the respective wrap crosses the fibre of the previous wrap or layer in the completed bundle;

Figure 14 is a perspective view illustrating the relative positions of the annular bundle, and the collapsible and expansible sleeve in the completed bundle;

Figure 15 is a partially sectional longitudinal view of the completed bundle positioned in a mould during the potting operation wherein an end of the annular bundle of fibres is encapsulated;

Figure 16 is a partially sectional view of another embodiment used in the process of the invention wherein the fibre access surface planes in the potting compound are obtained in a different manner;

Figure 17 is a partially sectional view wherein still another method of obtaining fibre access surface planes is shown; and,

Figures 18 to 21 are graphs previously referred to.

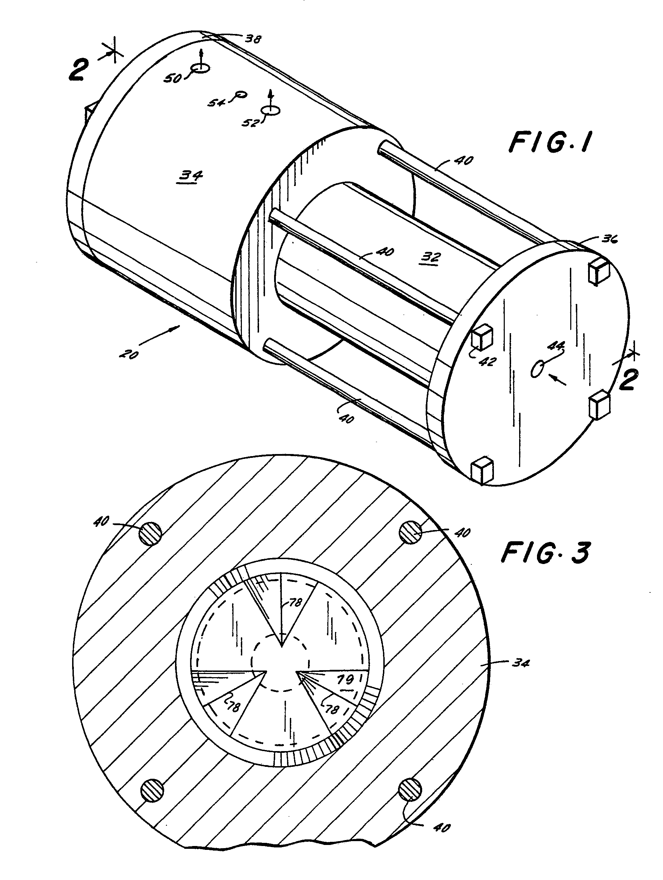

A module used in the process in accordance with this invention is designated in the drawings, generally by the numeral 20. The module in completed form is seen in Figures 1 to 5 and includes an annulus 22 formed of wound permeable hollow filaments and braid sleeve 26 folded over to sandwich the filaments for the most part between inner and outer sleeve sections 26a and 26b with solid rod 28 projecting within and occupying annulus core 30.

The specific manner in which the annulus is wound is described in detail below. The fibres which are of relatively large diameter are wound in helical fashion with adjacent layers wound in opposite hand. There is relatively uniform distribution of the large diameter fibres and the channel spaces and surfaces of the fibres usable for separation. In the preferred embodiment the hollow fibres are 250 $\mu$m or greater in outside diameter. In certain applications 500 $\mu$m outside diameter is preferred. Although any suitable hollow fibre can be used, the preferred embodiment contemplates a composite hollow fibre comprising a porous substrate, overcoated with a selected high filtration rejection barrier.

The annulus 22 is encased within pressure resistant shell 32 and pressure sleeve 34 between end plates 36 and 38 held in position by stringers 40 passing through holes 42 formed in the end plates. Axial feed-in port 44 is provided in end plate 36 to allow the fluid which is being operated upon to wash the outside of the fibres 22 after passing through prefilter 46 and perforated disc 48. In certain applications either or both prefilter 46 and disc 48 can be omitted. In the preferred embodiment prefilter 46 is a felt structure through which the liquid can pass and disc 48 is a rigid plastic member.

The pressure sleeve 34 is provided with radial ports 50 and 52 which respectively provide outlets for permeate and concentrate. Port 54 functions as a weep hole. Suitable O-rings 56, 58, 60, 62 and 64 are provided. The end of the annulus 22 within pressure sleeve 34 is encased in potting compound 66 as will be described below.

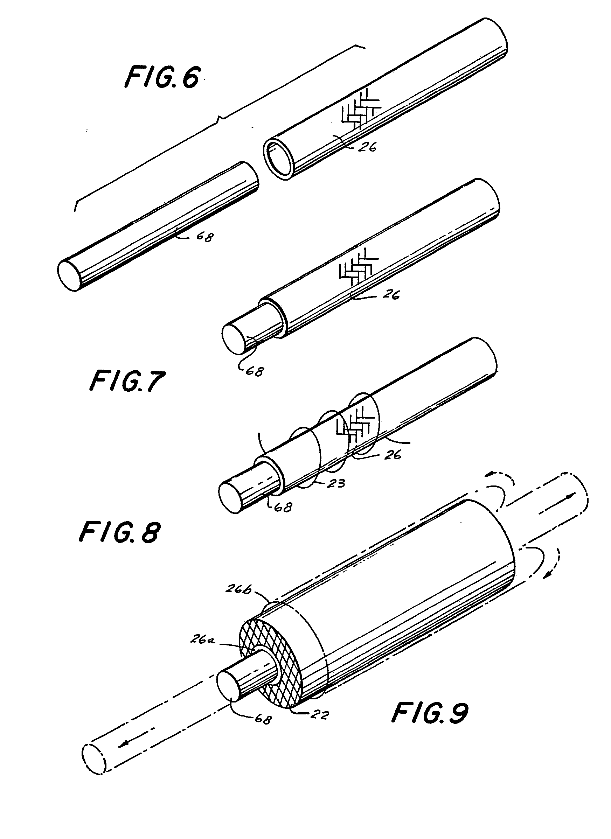

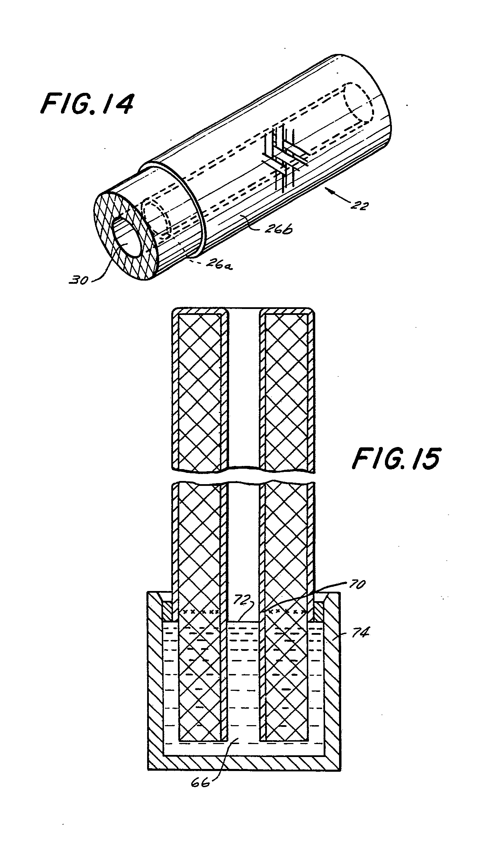

The manner of winding annulus 22 is seen in Figures 6 through 14. Collapsible expansible braided sleeve 26 is secured over suitable winding shaft 68 for a distance greater than the axial length of the annulus to support the inner surface of the annulus. This is the surface immediately upon which the first wraps of the bundle 22 are wound. An additional length of expansible sleeve sufficient to provide a continuous protective surface for the external surface of the annulus, rolled around one end of the annulus, is provided.

In preparing fibre bundles for use according to the present invention, the hollow fibres are wound continuously in alternating helices starting on a small diameter shaft, building an annular bundle. As stated above, the path length of fibre forming a helix from one end of the bundle to the other is a function of the radial position of the fibre in the annulus and its helix angle. Therefore, unless appropriate adjustments are made in the relative speed of rotation of the winding shaft and the end-to-end traverse speed of the bundle of filaments during the winding, there will be a continuously increasing length of fibre in any pass between the two ends of the bundle as the radial position increases. We therefore preferably select pre-calculated limits for the specific ratio of the rotational velocity of the winding mandrel and the reciprocating traverse mechanism, and lay down helices at selected radial positions in the annulus varying very slightly in respect to their length. For example, a helix length from the innermost to the outermost regions of the annulus never varying more than 10% around the optimum length is preferred and readily achieved.

A series of discrete ratios of the winding and traverse rates is selected and changed from one ratio to the next during the winding at predetermined annular positions thus avoiding the building up of hills and valleys.

In the Figures the first layer of helical winding by way of example is indicated by the numeral 23, a second by the numeral 24 and a third by the numeral 25, there being adjacent intermediate unindicated windings wound in opposite hand.

This solves problems present in conventional modules regarding the pressure losses associated with bore flow within a hollow fibre and takes into account fibre length and bore diameter. This avoids an increase in percent salt passage and a decrease in the effective use of surface of the fibre in respect to the nominal "zero"-length flux and flux and rejection are not diminished because fibres are "too long" relative to their bore size and inherent permeation rate.

Upon completion of the winding operation the outer end 26b of the braid is wrapped over the annulus 22 with the inner end 26a of the braid left within and the mandrel 68 removed exposing bore 30.

After winding, one end of annulus 22 is encapsulated in potting compound 66. The art of casting fibrous and other materials into a common matrix is well known and referred to as "potting". It is also well known to select potting compounds of which epoxies are but one example, so that their compatibility with fibres or other materials to be encapsulated makes for intimate bonding in the interfaces between the fibres or particles, and the encapsulating compound. Thus, in the case of hollow fibres to be sealed in the potting compound 66 it would be most desirable that the fibre surfaces be wet well by the potting compound in its prepolymerised fluid form. As a natural consequence of good wettability of the fibres by the potting compound before it is cured, there will be a tendency for the potting compound in its precured state to migrate by capillarity among the fibres, perhaps to considerable distance beyond the position where it would be useful for the cured potting compound to be. In the potting this would lead to occlusion and loss of membrane surface of some of the fibre, possible pockets of unsealed regions, and unnecessary utilisation of epoxy compound.

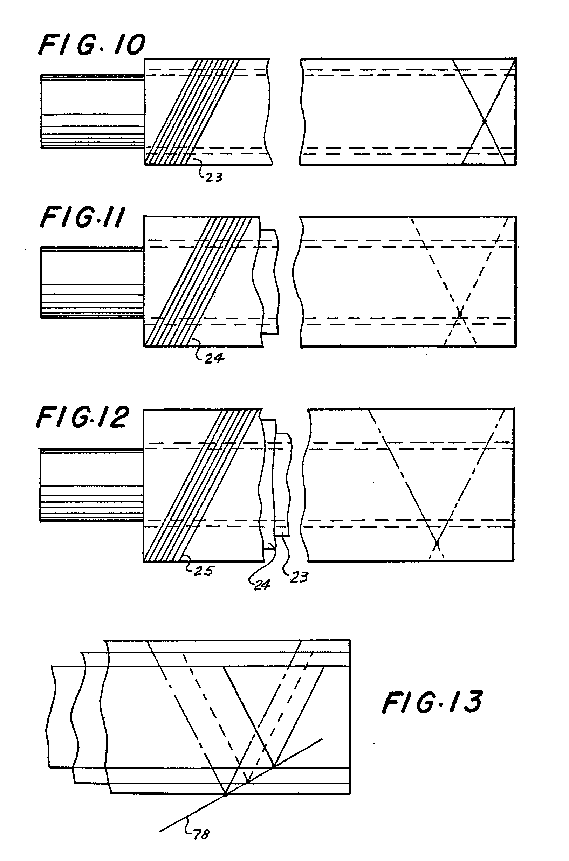

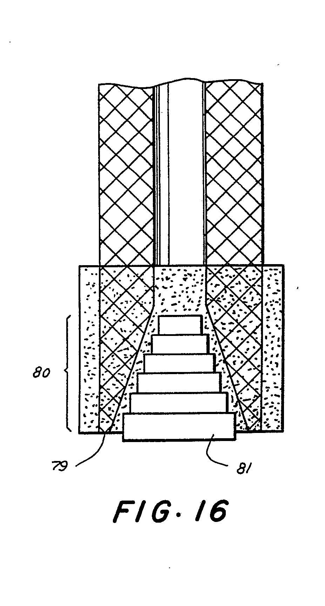

A ring of rubbery cement as indicated in Figure 15 by the numeral 70 is applied to the extensible sleeve member on the winding shaft 68 during the winding operation at a position that will correspond ultimately to the upper regions 72 of the potting compound 66 when it is later placed in mould 74 as shown in Figure 5. Then during the winding of the fibres on first the extensible sleeve and subsequently on top of the preceding fibre wraps as shown in Figures 10—13, a continuous deposit of the same rubbery cement is made at generally the same axial position in the annulus. At the completion of the winding of the entire annulus, there exits with it a substantially doughnut or O-ring barrier membrane of the rubbery cement in the plane generally designated by numeral 70 in Figure 15, separating the portion of the fibres which will ultimately become imbedded in the potting compound from the remainder of their lengths. In the same sense, the end of inner extensible sleeve member 26a also has the barrier membrane, applied thereto, so that if it to has a capability for inducing capillary migration of the precured potting compound, said capillarity would be obstructed at the same axial point of position.

The completion of the potting operation after winding is illustrated in Figure 15 with the mould and potting compound designated respectively by the numerals 74 and 66. The uncured potting compound 66 in mould 74 is subject to vibration from subsonic to ultrasonic frequencies by a suitable impulsing device, such as a vibrating hammer or ultrasonic transducer, not shown. The fibre bundle 22 is immersed into the mould 74 containing the precured potting compound 66 which, under the urging of the vibratory energy supplied to the mould, tends to migrate within and fill the interstices of the bundle with much greater ease then would have been secured by gravity alone.

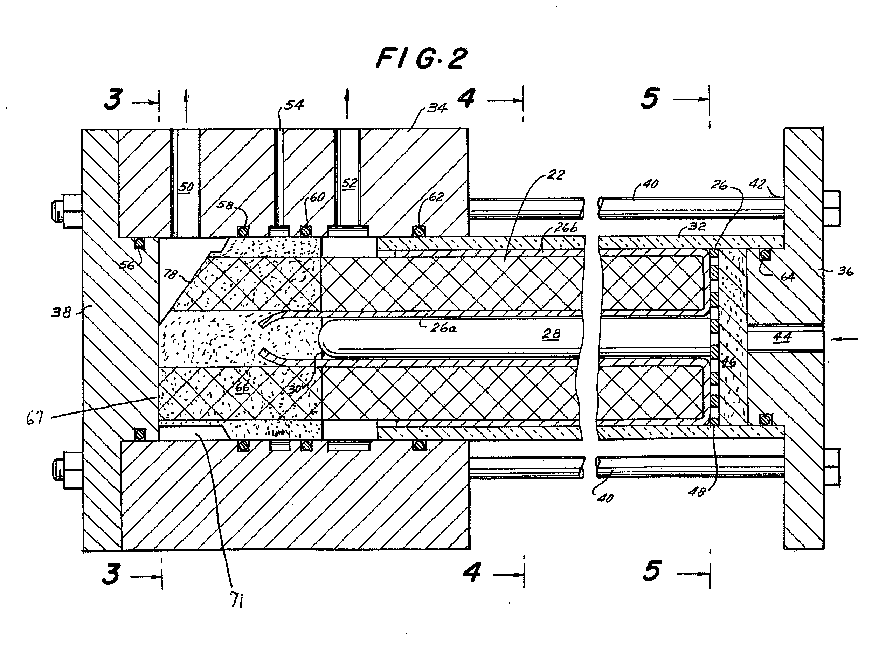

After potting the fibres of the annulus must be opened so that permeate within the individual bores thereof can be received and collected in the collection chamber or annular gallery 71 provided in the mould potting compound, for removal through port 50. To ensure that the internal pressure force developed in the module during use and acting against the fibre potting compound 66 is resisted by a surface of the potting 66 in which no fibres end. The numeral 67 in Figure 2 designates this surface. Additionally the surface 67 of the potting supports the thrust developed by the internal hydraulic pressure acting against the inwardly facing surface of the potting.

The ends of fibres which are cut or exposed to provide exit for the permeate flow are in access surfaces within the potting compound at either a different elevation or a different angle than the surface of the potting compound required to take the pressurising thrust force, or both.

We have found that if a number of angular slices are made into the end of the cylinder of fibre-containing potting, connecting points near the centre of surface 67, upwardly and outwardly with points in the surface of the annular gallery 71 of the potting providing continuous channels connecting these surfaces and providing an apex in the slice along 78 as seen in the Figures, all fibres will have open ends exposed to gallery 71.

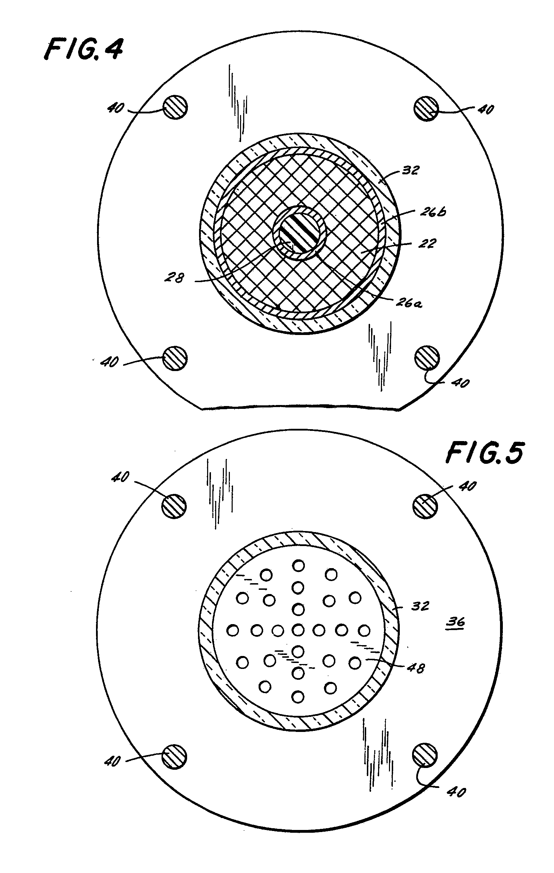

As seen in Figure 3, the three v-shaped slices comprise six access surfaces, 79, lying at an oblique angle to the base of the potting compound. These access surface planes resulting from the cutting communicate with the annular gallery within the low pressure region of the assembled module, providing thereby ready access to the permeate collection system. The creation of the planes by cutting of the potting compound is accomplished in the preferred embodiment at a time in the curing cycle of the potting compound prior to its final cure. By the selection of a potting compound and control of the time and temperature after immersion of the fibre bundle in the mould, the potting compound achieves a state in which it is readily cut without creation of unwanted detritus to block the fibre openings yet of sufficient resilient integrity to slice cleanly by means of a sharp-edged blade. After cutting, cure of the potting compound is completed by heat and/or the passage of time.

An alternative embodiment of the module used in the invention directed toward the creation of cut fibre ends in an access surface plane of the potting compound is shown in Figure 16. In this example, the fibre helix bundle is wound in such a way that at one end the helix wrapping takes a continuously increasingly steeper angle, forming a conical taper inner surface over a distance indicated by the bracketed length marked "80" in Figure 16. When this conically tapered end of the annular array of fibres is potted in a mould, it is mounted along with a stepped plug 81, in such a way that the potting compound encapsulates concurrently the end of the fibre bundle and the plug. After curing, a narrow annular access surface, 79, is machined into the potting compound at an elevation above the support surface provided by the plug.

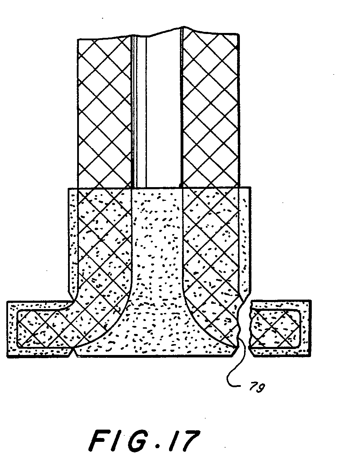

Still another embodiment capable of use in our invention is illustrated by Figure 17. Here, a wound bundle of filaments is prepared having loops at one end extending at right angles to the main axis of the bundle. This can be accomplished, for example, by mounting on the winding mandrel a thin, disclike member several inches larger in diameter than the mandrel. During the winding operation, the traverse of the yarn is carried axially beyond said disc so that there is a section of yarn from each loop of the wind that passes over the extreme edge of the disc before the yarn direction is reversed. The result of such a winding process is to provide at one end of the helically wound bundle a flange-like circular array of fibres whose axes at that point lie generally at right angles to the annulus axis. Later, the entire flange-like circular array of fibres plus an additional region axially inward of said array become the site for the infusion of potting compound. The mould for such an assemblage provides means for creating segments in the potting compound with fibres of the flange-like bundle extension lying in said segments of potting compound. After the full cure of said potting compound, it is possible to create open fibre ends in the fibre lengths lying at right angles to the main axis of the annulus by shearing off the segmented zones of potting compound in which the flange-like array of fibres has been embedded. Thus an access plane 79, will be created where each such segmented zone of potting compound has been fractured from the body of the pot. Open ends of fibres will again be found in planes lying at some angle, generally at a right angle, to the surface against which the thrust on the potting compound is applied during module operation.

Another feature concerns the sealing of the pressurised concentrate regions of the module separate from the permeate collection regions of the module.

The permeate collection chamber is sealed apart from the pressurised concentrate region of the potting compound by "O"-rings 56 and 58 with weephole 54 additionally protected by O-ring seal 60 to allow any leak of concentrate to exit the module assembly without inadvertently commingling with the permeate. The pressurised concentrate is removed at port 52 which is sealed by O-rings 60 and 62. Although the "O"-rings are hidden during operation of the module, any leakage past them can readily be detected and corrective action taken.

The O-rings 58 and 60 define an intermediate zone between the collection zone containing the collection chamber 71 and the pressurised zone which is surrounded by the pressure resistant shell 32.

In the prior art modules the pressure shell has been a cylindrical chamber in view of the accepted manner of resisting the high hydrostatic pressures. The requirement has been imposed on the shell to accept both the hoop stress loadings and axial loading developed by connections to the end plates. In addition, the end plates were frequently mounted to the shell and connected by snap rings or the like, which carried the thrust on the end plates to shell surface through grooves or some other connective ridges or the like. This required that the shell be of substantial thickness and mechanical integrity in all directions. As illustrated the stringer bolts 40 secure the two end plates 36 and 38 of the pressure cylinder to one another, thereby eliminating axial stress on the shell. By use of these stress-bearing stringer members, problems associated with connecting end plates to the shell by snap rings and the like are also eliminated. These features allow for simpler fabrication of the shell itself and the assembly and disassembly of the entire system, as well as access to its internal parts.

**Claims**

1. A process for the separation of constituents of a gas/gas, liquid/liquid, or a liquid/solid mixture or solution, wherein the mixture or solution is supplied under pressure to a hollow filament separatory module which contains a bundle of semi-permeable hollow filaments, whereby permeate passes through the walls of the filaments and is separated from other constituents of the mixture or solution, the bundle having the shape of a hollow right circular cylinder and consisting of a plurality of layers of the filaments, each of the layers consisting of filaments, each disposed in a helix with the helices in adjacent layers being wound to opposite hands and either all the filaments having both ends open or all of the filaments having one end sealed and one end open, characterized in that the straightened lengths of the filaments when both ends are open, or twice the straightened lengths of the filaments when one end is sealed and one end is open, are no greater than $L_{crit}$ ($\pm 10\%$) in centimetres, where:—

$$L_{crit} = \sqrt{\frac{(P - \Delta\pi) \times (ID)^3 \times (R)}{50F}}$$

wherein:
P = Module inlet feed pressure in kN/m²/98;

$\Delta\pi$=Osmotic pressure difference between feed solution and permeate in kN/m$^2$/98;

ID=Filament internal diameter in micrometres;

R=Ratio of filament inside diameter to outside diameter;

F=Flux of filament based on its outside diameter at the effective operating pressure expressed as a velocity of micrometres per second ($\mu$/sec).

2. A process according to Claim 1, in which each filament is a composite hollow filament comprising a porous substrate overcoated with a rejection barrier which restricts the passage of salts in a feed solution to the module.

3. A process according to Claim 1 or Claim 2, in which there is a sleeve within the bore of the annular bundle, the sleeve projecting from the bore and being rolled around one end of the bundle to provide protection therefor.

4. A process according to any one of Claims 1 to 3, in which the outside diameter of each hollow filament is above 100 micrometres.

5. A process according to Claim 1, in which the bundle of filaments is formed by winding one or a group of filaments continuously on a mandrel while continuously making reciprocating traverses of the point of winding parallel to the axis of the mandrel between two points a distance D apart, N turns being wound in one such traverse, N being selected so that the filament turns do not build up into ridges, the traverses each with the same number of turns being made until a lamella of turns has been built up to a larger radius after which the ratio of rotational to traversing velocities is changed to reduce the number of turns N in each traverse over the distance D to a second smaller number and continuing to make traverses each with the same reduced number of turns without building ridges until a second lamella has been built up, and thereafter making successively additional discrete reductions of the number of turns N over the distance D to produce additional lamellae each formed by a number of traverses with the same number of turns in each traverse until the bundle external radius is reached.

6. A process according to Claim 5, in which, after the bundle external radius has been reached, the bundle is removed from the mandrel, one or both ends of the bundle are infused in a potting compound, the compound is cured and open ends of the filaments are provided in one or both ends of the bundle.

7. A process according to Claim 5 or Claim 6, in which the filaments have an outside diameter of above 100 micrometres.

8. A process according to any one of Claims 5 to 7, in which prior to winding the annular bundle, an expansible sleeve is secured over the winding mandrel, the sleeve having a length greater than the axial length of the bundle to support the inner surface of the bundle which is wound thereon, and after winding, with the inner end of the sleeve remaining within the bore of the annulus, the outer end of the sleeve is wrapped over the exterior of the bundle to provide a protective covering, the mandrel being removed.

## Patentansprüche

1. Verfahren zum Trennen von Mischungen aus Gase, Flüssigkeiten, und Feststoffen oder Lösungen, wobei das Gemisch oder die Lösung unter Druck einem Hohlfaser-trennungsmoduln zugeführt wird, der ein Bündel semipermeabler Hohlfasern umfaßt, wodurch Permeat die Wände der Fasern durchströmt und von den anderen Bestandteilen des Gemisches oder der Lösung getrennt wird, und wobei das Bündel die Form eines hohlen geraden Kreiszylinders besitzt und aus einer Vielzahl von Schichten der Fasern besteht, die jeweils in einer Helix bzw. Schraube angeordnet sind, wobei die Helices in den benachbarten Schichten entgegengesetzt gewickelt und entweder bei sämtlichen Fasern beide Enden offen sind, oder bei sämtlichen Fasern eine Ende offen und das andere verschlossen bzw. versiegelt ist, dadurch gekennzeichnet, daß die verstärkten Längen der Fasern, wenn beide Enden offen sind, oder die gestärkten zweifachen Längen der Fasern, wenn ein Ende versiegelt und das andere offen ist, nicht größer als

$$L_{crit}(\pm 10\%) \text{ in cm, wobei } L_{crit} = \sqrt{\frac{(P-\Delta\pi)\times(ID)^3\times(R)}{50F}}$$

P=Modul-Einlaßspeisedruck in kN/m$^2$/98;

$\Delta\pi$=osmotische Druckdifferenz zwischen Speise- bzw. Eingabelösung und Permeat in kN/m$^2$/98;

ID=Faserinnendurchmesser in Micrometern

R=Verhältnis des Faserinnendurchmessers zum Außendurchmessen;

F=Fluß der Faser basierend auf ihrem Außendurchmesser beim wirksamen Betriebsdruck, ausgedrückt als Geschwindigkeit in Micrometeren per Sekunde ($\mu$/Sek.)

2. Verfahren nach Anspruch 1, dadurch gekennzeichnet, daß jede Faser eine Verbundhohlfaser ist, die ein poröses Substrat umfaßt, das mit einer Abweisungsbarriere überzogen ist, die den Durchtritt von Salzen in die Beschickungslösung zum Modul einschränkt.

3. Verfahren nach Anspruch 1 oder 2, dadurch gekennzeichnet, daß eine Hülse innerhalb der Bohrung des ringförmigen Bündels angeordnet ist, wobei die Hülse aus der Bohrung hervorragt und um ein Ende des Bündels herum-gerollt ist, um einen Schutz dafür vorzusehen.

4. Verfahren nach irgendeinem der Ansprüche 1 bis 3, dadurch gekennzeichnet, daß der Außendurchmesser jeder Hohlfaser über 100 Micrometer beträgt.

5. Verfahren nach Anspruch 1, dadurch gekennzeichnet, daß das Faserbündel dadurch geformt wird, daß man eine Faser oder eine Gruppe von Fasern kontinuierlich auf einen Dorn wickelt, während kontinuierlich hin- und hergerichtete Querverläufe des Wicklungspunktes parallel zur Achse des Dorns zwischen zwei Punkten durchgeführt werden, die eine Entfernung D voneinander getrennt sind, und wobei N Drehungen bei einem solchen Querverlauf gewickelt werden, und daß N derart ausgewählt wird, daß die Faserdrehungen keine Rippen aufbauen, und daß die Querverläufe jeweils mit der gleichen Anzahl von Drehungen durchgeführt werden, bis ein Blättchen bzw. eine Lamelle an Drehungen einen größeren Radius aufgebaut hat, nach dem das Verhältnis von Drehungs- zur Querverlaufsgeschwindigkeit verändert worden ist, um die Anzahl von Drehungen N bei jedem Querverlauf über die Distanz D bis zu einer zweiten geringeren Anzahl zu reduzieren unter Fortführung von Querverläufen jeweils mit der gleichen reduzierten Anzahl von Drehungen, ohne Rippen aufzubauen, bis eine zweite Lamelle aufgebaut hat, und daß daran anschließend aufeinanderfolgende, zusätzliche diskrete Verringerungen der Anzahl von Drehungen N über die Distanz D durchgeführt werden, um zusätzliche Lamellen zu erzeugen, die jeweils durch eine Anzahl von Querverläufen gebildet wird, mit der gleichen Anzahl von Drehungen bei jedem Querverlauf bis der externe Radius des Bündels erreicht ist.

6. Verfahren nach Anspruch 5, dadurch gekennzeichnet, daß nach dem der externe Radius des Bündels erreicht worden ist, das Bündel vom Dorn entfernt wird und eine oder beide Enden des Bündels mit einer Pottingverbindung überzogen werden, daß die Verbindung gehärtet und offene Enden von Fasern in einem oder beiden Enden des Bündels vorgesehen werden.

7. Verfahren nach Anspruch 5 oder 6, dadurch gekennzeichnet, daß die Fasern einen Außendurchmesser von über 100 Micrometern besitzen.

8. Verfahren nach irgendeinem der Ansprüche 5 bis 7, dadurch gekennzeichnet, daß vor der Wicklung des ringförmigen Bündels eine dehnbare Hülse über dem Wicklungsdorn befestigt wird, und daß die Hülse eine größere Länge besitzt als die Axiallänge des Bündels, um die Innenfläche des Bündels, das darauf gewickelt wird, zu stützen und daß nach der Wicklung, wobei das innere Ende der Hülse innerhalb der Bohrung des Annulus bzw. Ringkörpers bleibt, während das äußere Ende der Hülse über das Äußere des Bündels gezogen bzw. umhüllt wird, der Dorn entfernt wird.

**Revendications**

1. Procédé de séparation de constituants d'un mélange ou d'une solution gaz/gaz liquide/liquide ou liquide/solide, dans lequel le mélange ou la solution est fourni sous pression à un module séparateur à filaments creux qui contient un faisceau de filaments creux semiperméables, de manière qu'un perméat passe à travers les parois de filaments et soit séparé des autres constituants du mélange ou de la solution, le faisceau ayant la forme d'un cylindre circulaire droit et creux et comprenant plusieurs couches constituées des filaments, chacune des couches comprenant des filaments disposés chacun en une hélice, les hélices de couches adjacentes étant enroulées à des pas opposés et tous les filaments étant ouverts à leurs deux extrémités, ou tous les filaments étant scellés à une extrémité et ouverts à une extrémité, caractérisé en ce que les longueurs à l'état redressé des filaments ouverts à leurs deux extrémités, ou le double des longueurs à l'état redressé des filaments scellés à une extrémité, ne sont pas supérieurs à $L_{crit}$, en centimètres, où

$$L_{crit} = \sqrt{\frac{(P - \Delta\pi) \times (ID)^3 \times (R)}{50F}}$$

dans laquelle:

P = Pression de charge à l'entrée du module, en $kN/m^2/98$;

$\Delta\pi$ = Différence de pression osmotique entre la solution de charge et le perméat en $kN/m^2/98$;

ID = Diamètres interne des filaments, en micromètres;

R = Rapport du diamètre intérieur des filaments au diamètre extérieur;

F = Flux d'un filament sur la base de son diamètre extérieur à la pression utile de travail, exprimé sous la forme d'une vitesse en micromètres par seconde ($\mu/s$).

2. Procédé selon la revendication 1, dans lequel chaque filament est un filament creux composite comprenant un substrat poreux revêtu d'une barrière de réjection qui limite le passage de sels dans une solution de charge du module.

3. Procédé selon la revendication 1 ou la revendication 2, dans lequel un manchon est logé dans l'alésage du faisceau annulaire, le manchon faisant saillie de l'alésage et étant roulé autour d'une extrémité du faisceau pour en assurer la protection.

4. Procédé selon l'une quelconque des revendications 1 à 3, dans lequel le diamètre extérieur de chaque filament creux est supérieur à 100 micromètres.

5. Procédé selon la revendication 1, dans lequel le faisceau de filaments est formé par bobinage d'un filament ou d'un groupe de filaments, en continu, sur un mandrin, tandis que l'on fait exécuter en continu des courses alternatives au point de bobinage, parallèlement à l'axe du mandrin entre deux points espacés d'une distance D, N spires étant bobinées sur une telle course, N étant choisi de manière que les spires de filaments ne s'accumulent pas en formant des arêtes, les courses étant effectuées chacune avec le même nombre de spires jusqu'à ce qu'une nappe de spires se soit accumulée à un plus grand rayon, après quoi le rapport de la vitesse de rotation et la vitesse de course est modifié pour réduire le nombre de spires N de chaque course sur la distance D à un second nombre plus petit, les courses continuant d'être effectuées chacune avec le même nombre réduit de spires sans formation tion d'arêtes jusqu'à ce qu'une seconde nappe se soit accumulée, d'autres réductions discontinues supplémentaires du nombre N de spires sur la distance D étant ensuite effectuées les unes à la suite des autres pour produire d'autres nappes formées chacune par un certain nombre de courses avec le même nombre de spires dans chaque course, jusqu'à ce que le rayon externe du faisceau soit atteint.

6. Procédé selon la revendication 5, dans lequel, après que le rayon externe du faisceau a été atteint, le faisceau est retiré du mandrin, une extrémité ou les deux extrémités du faisceau sont soumises à une infusion dans un composé d'enrobage, le composé est durci et les extrémités ouvertes des filaments sont formées à une ou aux deux extrémités du faisceau.

7. Procédé selon la revendication 5 ou la revendication 6, dans lequel les filaments ont un diamètre extérieur supérieur à 100 micromètres.

8. Procédé selon l'une quelconque des revendications 5 à 7, dans lequel, avant le bobinage du faisceau annulaire, un manchon expansible est fixé sur le mandrin de bobinage, le manchon ayant une longueur supérieure à la longueur axiale du faisceau afin de supporter la surface intérieure du faisceau qui est enroulé sur lui, et après le bobinage, l'extrémité intérieure du manchon restant dans l'alésage du corps annulaire, l'extrémité extérieure du manchon est rabattue sur l'extérieur du faisceau pour former un revêtement protecteur, le mandrin étant retiré.

FIG·1

FIG·3

FIG·2

**FIG.4**

**FIG.5**

FIG.6

FIG.7

FIG.8

FIG.9

*FIG. 10*

*FIG. 11*

*FIG. 12*

*FIG. 13*

FIG.14

FIG.15

FIG. 16

FIG.17

FIG. 18

Plate 1
Flux vs. length
Several samples, all at
P-ΔΠ = 56.7 Kg/cm2.

0 009 374

FIG.19

# FIG. 20

Plate 3
Normalized flux, $F/F_0$
vs. $L/L_{crit}$

● 5 Samples @ 56.7 $kg/cm^2$

⊙ 2367-5-4 @ 4 pressures

0 009 374

FIG.21

*Plate 4*
*% Salt passage*
*vs  L/L*crit

0 009 374